# NEW EUROPEAN PATENT SPECIFICATION

(11) **EP 3 473 882 B2**
(45) Date of publication and mention of the opposition decision: **31.12.2025**
(45) Mention of the grant of the patent: 24.11.2021
(21) Application number: 17813380.7
(22) Date of filing: 15.06.2017
(51) Int. Cl.: F16D 65/092

(54) **FRICTION-PAD ASSEMBLY FOR DISC BRAKE**
BREMSBELAGANORDNUNG FÜR SCHEIBENBREMSE
ENSEMBLE PATIN DE FRICTION DESTINÉ À UN FREIN À DISQUE

(30) Priority: 15.06.2016 JP 2016119011
(43) Date of publication of application: 24.04.2019
(73) Proprietor: Akebono Brake Industry Co., Ltd., Tokyo 103-8534 (JP)
(72) Inventor: MINOSHIMA, Yuta, Tokyo 103-8534 (JP); MAEHARA, Toshifumi, Tokyo 103-8534 (JP); YOSHIKAWA, Kazuhiro, Tokyo 103-8534 (JP)
(74) Representative: Grünecker Patent- und Rechtsanwälte PartG mbB
(86) International application number: PCT/JP2017/022102
(87) International publication number: WO 2017/217485

(56) References cited:
- EP-A1- 2 023 000
- EP-A1- 2 520 818
- EP-A1- 2 840 280
- EP-A1- 2 918 865
- WO-A1-2012/081641
- WO-A1-2014/171523
- DE-B1- 1 575 773
- JP-A- 2006 132 741
- JP-A- 2013 221 564
- JP-B2- 5 021 468
- JP-U- H0 625 513
- JP-U- S59 144 280

## Description

### Technical Field

The present invention relates to a friction pad assembly for a disc brake.

### Background Art

It is known that a disc brake device used in a disc brake of a vehicle for example, particularly a railway vehicle, includes: a disc rotor fixed to an axle; a friction pad assembly for a disc brake in which a lining member is assembled to a torque receiving plate facing the disc rotor; and a brake caliper which builds-in the disc rotor driving the torque receiving plate forward and backward to the disc rotor and which is fixed to a vehicle body frame. In this disc brake device, the torque receiving plate is advanced to a disc rotor side, and braking force is generated by sliding friction when the lining member is pressed against the disc rotor.

In the disc brake device for a railway vehicle, since the disc rotor and the friction pad assembly for a disc brake are large in size, when the lining member to be pressed against the disc rotor is formed as an integral component, a non-contact area increases due to undulation or the like generated in the disc rotor with frictional heat or the like, a stable frictional area cannot be maintained and stable braking characteristics cannot be obtained.

Therefore, in order to solve such a problem, a lining assembly which is swingably supported by a guide plate and pressed against the disc rotor is integrally formed on a back plate portion fixed to a back surface of a friction material with a plate fitting portion where the outer peripheral surface is revolvably fitted into a guide hole portion of the guide plate, a retaining flange portion having an outer diameter larger than an outer diameter of the guide hole portion, and a curved convex portion formed on the retaining flange portion by protruding toward the torque receiving plate. There has been proposed a friction pad assembly for a disc brake having a configuration in which the lining assembly transmits braking torque acting when the disc rotor contacts with the friction material from the plate fitting portion to the guide plate and is biased to the guide plate side to be supported by a spring member (disc spring) equipped between the torque receiving plate fixed to the guide plate and the back of the back plate portion (see Patent Document 1).

However, in the friction pad assembly for disc brake in the related art, a binding force of the lining assembly may not be sufficient, vibration may be induced when the lining assembly tilts, and squeal noise (noise; a so-called brake squeal) may be generated.

On the other hand, a brake lining where the squeal noise is not generated during braking is proposed (see Patent Document 2).

In the brake lining, a plurality of friction elements (lining assemblies) are held by a support plate (torque receiving plate) by a mask plate (guide plate). These friction elements include a lining support (back plate portion) and a friction lining (friction material) coupled to the lining support. The brake lining can be crimped on a friction surface of the brake disc (disc rotor) during braking operation. Each friction element is in contact with the support plate. A damping layer is disposed between the lining support and the support plate to reduce propagation of acoustic vibration. The damping layer is formed from a plurality of discrete layers of various different materials, includes at least one layer made of metal, and is clamped between the lining support and the support plate. Therefore, in the brake lining, vibration generated during one braking process is at least sufficiently damped by the damping layer. Thus, the squeal noise (noise; a so-called brake squeal) is not generated. Further relevant prior art is disclosed in WO 2012/081641 A1, EP 2 840 280 A1, EP 2 918 865 A1, and DE 15 75 773 B . In particular, DE 15 75 773 B discloses a spring member having a mesh shape. A further prior art is disclosed in WO 2014 171 523 A1.

### Prior Art Document

### Patent Document

Patent Document 1: JP-A-2012-141055
Patent Document 2: Japanese Patent No. 5021468

### Summary of the Invention

### Problems to be Solved by the Invention

However, the above-described damping layer in the related art must be clamped between the lining support and the support plate. Therefore, when the damping layer is used in the friction pad assembly for a disc brake in which the spring member is equipped between the torque receiving plate and the back of the back plate portion to bias the lining assembly to the guide plate side, an effect of preventing the brake squeal is not sufficient. Therefore, there is a further improvement request for preventing the brake squeal of the friction pad assembly for a disc brake.

The present invention has been made in view of the above situation, an object thereof is to provide a friction pad assembly for a disc brake which can reduce noise during braking.

### Means for Solving the Problems

The above object according to the present invention is achieved by the following configuration.

In particular, it is provided a friction pad assembly having the features defined in claim 1.

According to the friction pad assembly for a disc brake having a configuration of claim 1, the pressing force from the torque receiving plate is transmitted to the lining assembly via the spring member having both an elastic function and a vibration suppressing function. Therefore, the spring member provided between the torque receiving plate and the back plate portion contributes to reduction of noise due to contact between the torque receiving plate and the back plate portion. That is, the spring member biases the lining assembly to the guide plate side, so that a load difference acting on the respective lining assemblies due to difference of the rotor surface due to thermal deformation and difference in the friction material thickness is alleviated from becoming an overload phenomenon of the friction material, and vibration propagating between the lining assembly and the torque receiving plate is blocked or reduced, and thus noise can be reduced.

In the friction pad assembly the spring member is a formed product of a mesh spring formed by weaving a wire rod in a mesh shape.

The spring member is composed of a mesh spring processed by knitting a wire rod of a stainless steel wire, a resin fiber, and the like, weaving in a mesh shape, and molding in a predetermined shape. The mesh spring is in a state in which countless wire rods are entangled at details, has a proper elastic modulus in directions in a plane and perpendicular to a plane, and has a vibration damping performance with a significantly great friction effect. Therefore, the spring member made of the formed product of the mesh spring can appropriately control displacement (spring constant) in directions in a plane and perpendicular to a plane and can appropriately attenuate vibration in directions in a plane and perpendicular to a plane, and a large effect can be exerted with respect to in-plane ringing.

The following arrangements (2) to (5) are unclaimed arrangements but are helpful for understanding the present invention.
(1) A friction pad assembly for a disc brake in which at least one lining assembly is swingably supported by a guide plate receiving braking torque and the lining assembly is pressed against a disc rotor, wherein: the lining assembly includes a friction material that comes in contact with the disc rotor during braking and a back plate portion fixed to a back surface of the friction material, the back plate portion includes a plate fitting portion swingably fitted to a guide hole portion provided in the guide plate; the plate fitting portion is inserted and equipped in the guide hole portion, and transmits the braking torque acting when the disc rotor contacts with the friction material from the plate fitting portion to the guide plate; and a spring member having an elastic function of biasing the lining assembly to the guide plate side and a vibration suppressing function of suppressing vibration generated when the disc rotor contacts with the friction material is provided between a torque receiving plate fixed to the guide plate and the back plate portion.
(2) The friction pad assembly for a disc brake according to the above (1), wherein a spot facing portion for positioning the spring member is formed on a back surface of the back plate portion.

According to friction pad assembly for a disc brake having the configuration of the above (2), the spring member can be positioned with respect to the back plate portion by the spot facing portion, and an increase in a disposition interval between the torque receiving plate and the back plate portion can be suppressed. Therefore, in the friction pad assembly for a disc brake, it is possible to reduce thickness by suppressing dimensions in a direction orthogonal to a sliding surface of the disc rotor.

In the assembly procedure in which the guide plate, the lining assembly, the spring member, and the torque receiving plate are laminated in order and assembled, since the spring member is temporarily held on the back plate portion in a positioned state, an assemblability is improved.

(3) The friction pad assembly for a disc brake according to the above (1) or (2), wherein a plurality of link plates which are deployed across a plurality of the lining assemblies and act a pressing force from the torque receiving plate on the lining assemblies are provided between an inner surface of the torque receiving plate fixed to the guide plate and the back plate portion, there is a gap therebetween.

According to the friction pad assembly for a disc brake having a configuration of the above (3), the pressing force from the torque receiving plate is transmitted to the lining assembly via the link plate. Therefore, the spring member provided on at least one side of a surface side and a back surface side of the link plate contributes to reduction of noise due to contact between the link plate and the torque receiving plate or the back plate portion. That is, vibration propagating between the lining assembly and the torque receiving plate is blocked or reduced via the link plate, so that noise can be reduced.

(4) The friction pad assembly for a disc brake according to the above (3), wherein a spot facing portion for positioning the spring member is formed on a back surface of the link plate where the spring member is disposed.

According to friction pad assembly for a disc brake having the configuration of the above (4), the spring member can be positioned with respect to the link plate by the spot facing portion, and an increase in a disposition interval between the torque receiving plate and the back plate portion can be suppressed. Therefore, in the friction pad assembly for a disc brake, it is possible to reduce thickness by suppressing dimensions in a direction orthogonal to a sliding surface of the disc rotor.

In the assembly procedure in which the guide plate, the lining assembly, the spring member, the link plate, and the torque receiving plate are laminated in order and assembled, since the spring member is temporarily held on the link plate in a positioned state, an assemblability is improved.

(5) The friction pad assembly for a disc brake according to any one of the above (1) to (4), wherein a spot facing portion for positioning the spring member is formed on an inner surface of the torque receiving plate where the spring member is disposed.

According to friction pad assembly for a disc brake having the configuration of the above (5), since the spring member can be positioned with respect to the torque receiving plate by the spot facing portion, the spring member does not deviate from the back surface of the back plate portion and does not hinder movement of the lining assembly. Further, since the disposition interval between the torque receiving plate and the back plate portion can be prevented from increasing, thickness can be reduced by suppressing dimensions in a direction orthogonal to a sliding surface of the disc rotor in the friction pad assembly for a disc brake.

### Effect of the Invention

According to the friction pad assembly for a disc brake according to the present invention, noise during braking can be reduced.

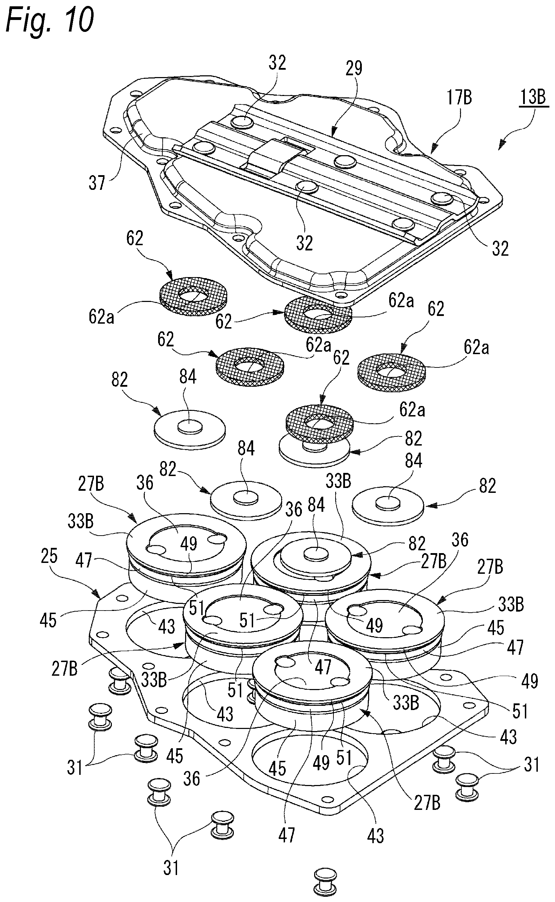

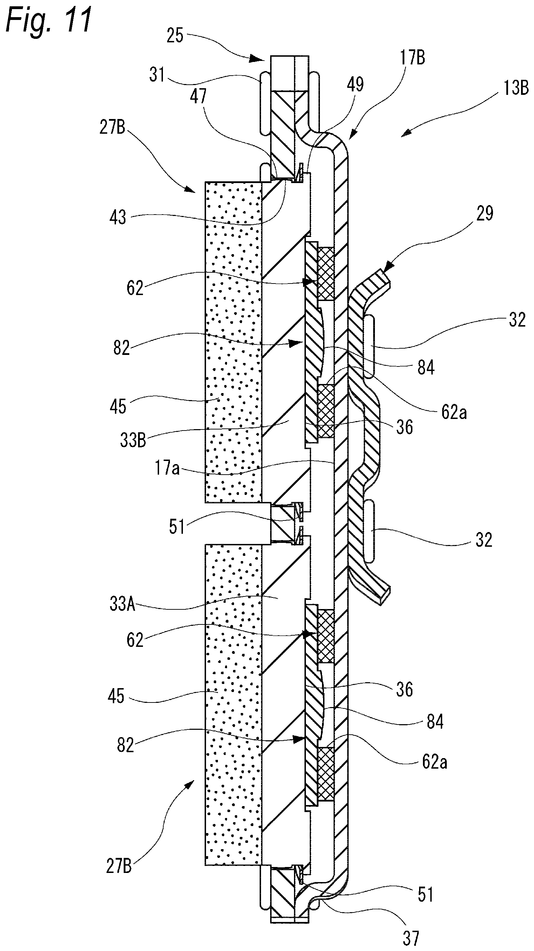

The present invention has been briefly described above. Further, details of the present invention will be clarified by reading a mode, hereinafter, referred to as "arrangement", described below with reference to attached drawings. In the following specific description there are described several arrangements. However, the third arrangement described in reference to Figs. 10 and 11 is an embodiment of the present invention. The further arrangements are helpful for understanding the present invention.

### Brief Description of Drawings

Fig. 1 is a front view of a friction pad assembly for a disc brake according to a first unclaimed arrangement.
Fig. 2 is a back view of the friction pad assembly for a disc brake illustrated in Fig. 1.
Fig. 3 is a sectional view taken along III-III in Fig. 1.
Fig. 4 is an exploded perspective view of the friction pad assembly for a disc brake illustrated in Fig. 1.
Fig. 5 is a perspective view showing an inner surface of a torque receiving plate illustrated in Fig. 4.
Fig. 6 is an exploded perspective view illustrating a state in which a lining assembly and a link plate are attached to a guide plate illustrated in Fig. 4.
Fig. 7 is a plan view illustrating a state in which a spring member is placed on the link plate illustrated in Fig. 6.
Fig. 8 is an exploded perspective view of a friction pad assembly for a disc brake according to a second unclaimed arrangement.
Fig. 9 is a sectional view and a main part enlarged view of the friction pad assembly for a disc brake illustrated in Fig. 8.
Fig. 10 is an exploded perspective view of a friction pad assembly for a disc brake according to the invention.
Fig. 11 is a sectional view of the friction pad assembly for a disc brake illustrated in Fig. 10.
Fig. 12 is an exploded perspective view of a friction pad assembly for a disc brake according to a fourth unclaimed arrangement.
Fig. 13 is an explanatory view which explains a spring member illustrated in Fig. 12. Fig. 13(a) is a partially broken perspective view, Fig. 13(b) is a longitudinal sectional view, and Fig. 13(c) is a longitudinal sectional view of an attached state.
Fig. 14 is a sectional view of the friction pad assembly for a disc brake illustrated in Fig. 12.

### Description of arrangements

Hereinafter, arrangements according to the present invention will be described with reference to drawings.

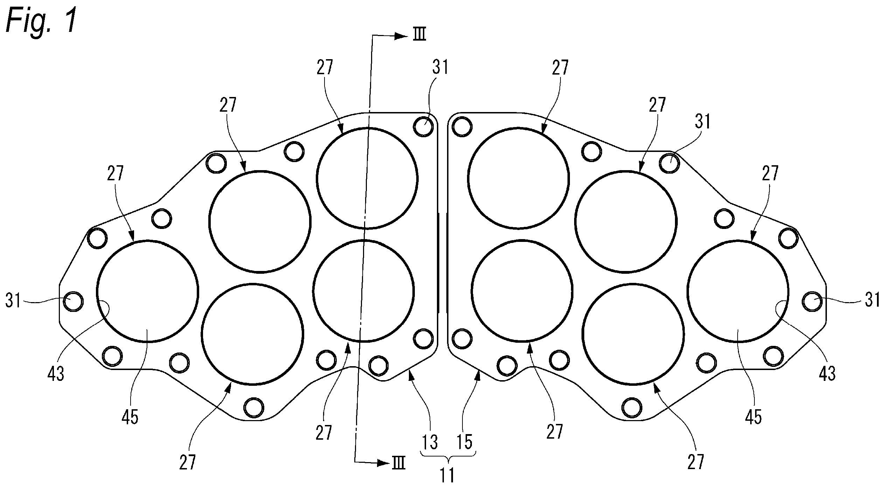

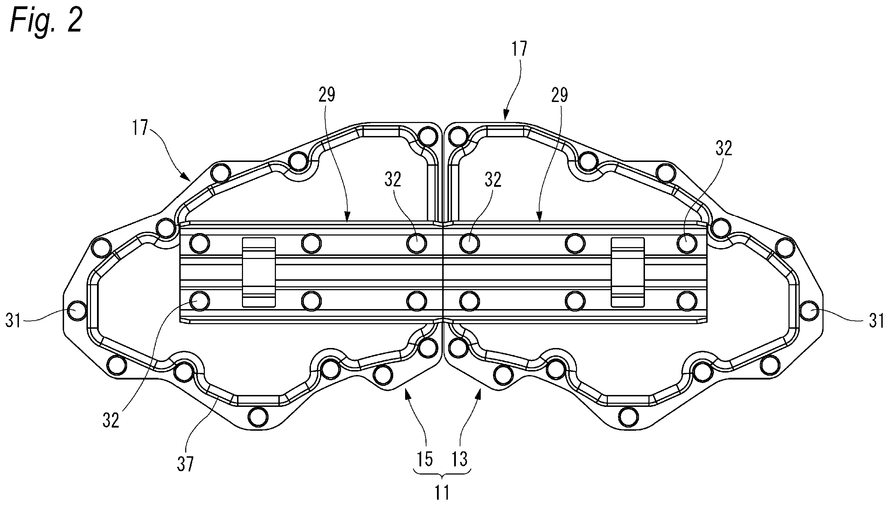

As illustrated in Fig. 1 and Fig. 2, a friction pad assembly 11 for a disc brake according to a first unclaimed arrangement is used in a disc brake device for a railway vehicle and includes a first friction pad assembly 13 and a second friction pad assembly 15 disposed adjacent to each other in a circumferential direction of a disc rotor (not illustrated) on an axle.

The first friction pad assembly 13 and the second friction pad assembly 15 have the same configuration, and are driven back and forth toward a disc rotor surface of the disc rotor by an actuator built into a brake caliper which is disposed facing the disc rotor on the axle and fixed to a vehicle body frame.

As illustrated in Fig. 2 to Fig. 7, the first friction pad assembly 13 and the second friction pad assembly 15 include a torque receiving plate 17 which is driven back and forth toward the disc rotor by the actuator built into the brake caliper (not illustrated), a first link plate 21 and a second link plate 23 which are two types of link plates laid on a substantially flat surface on an inner surface of the torque receiving plate 17 on the disc rotor side, a guide plate 25 connected and fixed to the torque receiving plate 17 on the disc rotor side of the torque receiving plate 17, five lining assemblies 27 swingably fitted and supported by the guide plate 25, and a spring member 53 provided between the first link plate 21, the second link plate 23 and the torque receiving plate 17.

As illustrated in Fig. 2, an anchor plate 29 is fixedly equipped on an outer surface of the torque receiving plate 17 by rivets 32. The anchor plate 29 is coupled to the actuator built into the brake caliper to enable forward and backward drive of the first friction pad assembly 13 and the second friction pad assembly 15 to the disc rotor.

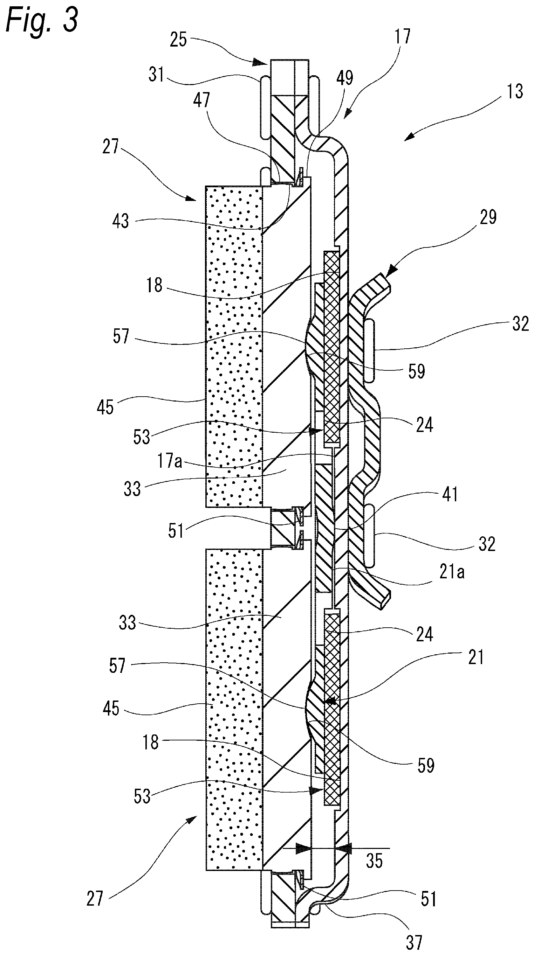

In order to open a gap 35 between the back plate portions 33 of the lining assemblies 27 illustrated in Fig. 3, the torque receiving plate 17 is formed in a thin dish shape which forms a peripheral wall 37 projecting from a peripheral portion of a flat plate member and seals a back side of the back plate portion 33. The torque receiving plate 17 opens the gap 35 between the back plate portions 33 of the lining assemblies 27, and is fixed to an outer peripheral portion of the guide plate 25 by the rivets 31, which is a fastening member.

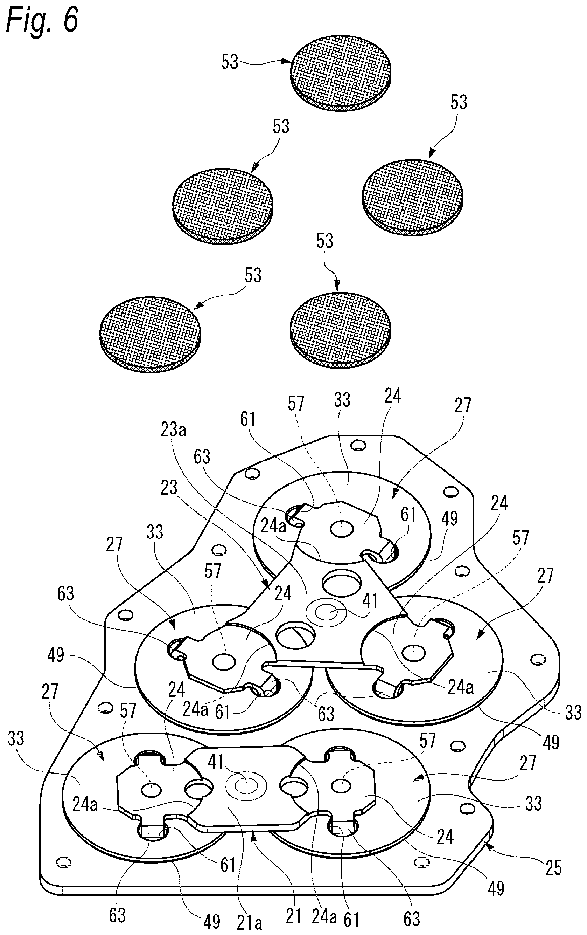

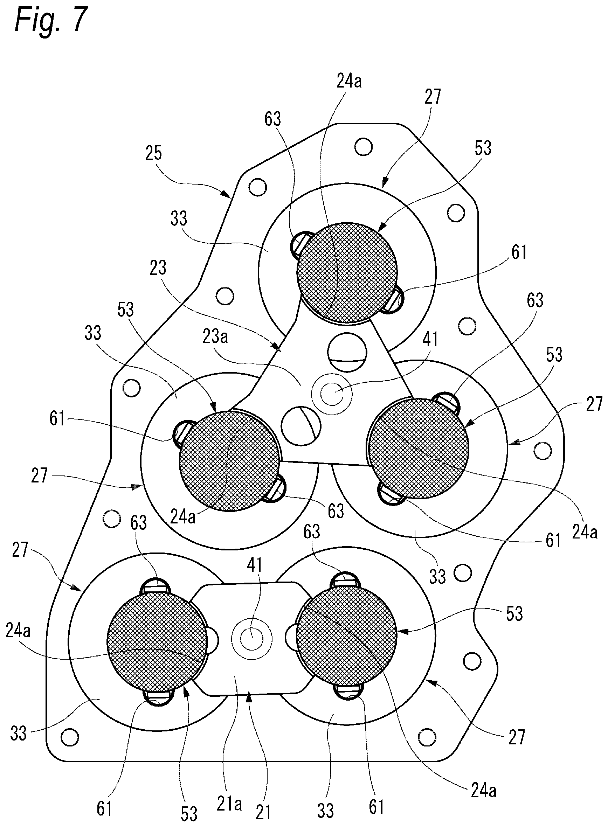

As illustrated in Figs. 6 and 7, the first link plate 21 and the second link plate 23 are deployed across the plurality of lining assemblies 27 to act a pressing force from the torque receiving plate 17 on the lining assemblies 27. Back surfaces 21a, 23a of the first link plate 21 and the second link plate 23 are formed with a spot facing portion 24 for positioning the spring member 53, and a plate abutting curved surface portion 41 which is a convex portion projecting from a position of almost a center of gravity of the first link plate 21 and the second link plate 23 toward an inner surface 17a of the torque receiving plate 17. Each spot facing portion 24 has an arcuate step portion 24a which abuts on a peripheral edge and causes the spring member 53 to correspond to a central position of the back plate portion 33 of the lining assembly 27. Each plate abutting curved surface portion 41 abuts on the inner surface 17a of the torque receiving plate 17 to allow the first link plate 21 and the second link plate 23 to swing.

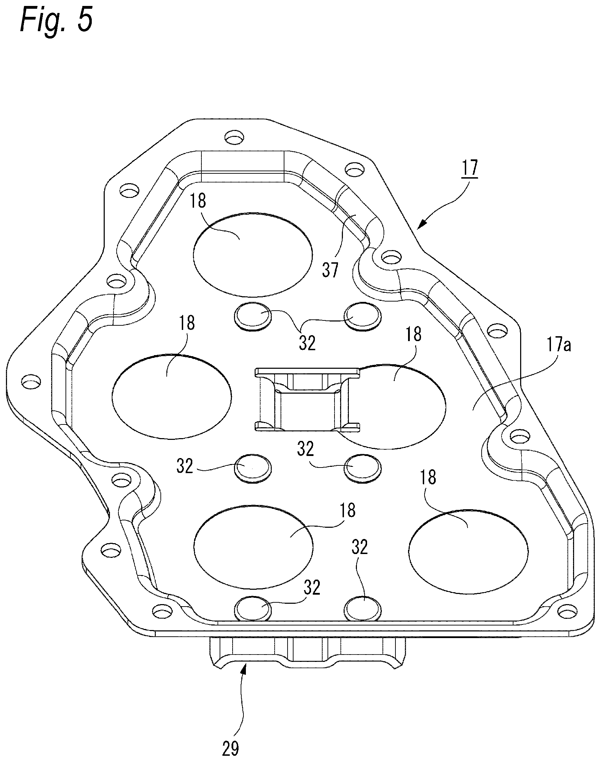

As illustrated in Fig. 5, spot facing portions 18 for positioning the spring members 53 respectively are formed on a surface (inner surface 17a) of the torque receiving plate 17 on sides of the first link plate 21 and the second link plate 23. The spot facing portion 18 is a circular recess having an inner diameter slightly larger than an outer diameter of the spring member 53.

In the guide plate 25, five guide holes 43 are formed at predetermined separation intervals, and lining assemblies 27 are equipped to the guide holes 43, respectively.

The lining assembly 27 includes a friction material 45 formed in an approximate disc shape and a back plate portion 33 fixed to a back surface of the friction material 45. As illustrated in Fig. 3, the back plate portion 33 is provided with a plate fitting portion 47 which is swingably fitted to the circular guide hole portion 43 through which an outer peripheral surface is formed on the guide plate 25, and a retaining flange portion 49 having an outer diameter larger than that of the guide hole portion 43. The lining assembly 27 transmits braking torque acting during contact between the disc rotor and the friction material 45 from the plate fitting portion 47 to the guide plate 25.

An annular leaf spring 51 is fitted to the plate fitting portion 47. An outer diameter of the leaf spring 51 is set larger than the guide hole portion 43. The leaf spring 51 fitted to the plate fitting portion 47 is sandwiched between the guide plate 25 and the retaining flange portion 49. Each lining assembly 27 is inserted and equipped into the guide hole portion 43 from a back surface side of the guide plate 25, and transmits braking torque acting during contact between the disc rotor and the friction material 45 from the plate fitting portion 47 to the guide plate 25.

In the friction pad assembly 11 for a disc brake, a plurality of (ten in this arrangement) lining assemblies 27 are spread and arranged in a planar shape. Here, since the leaf spring 51 disposed to be interposed between the retaining flange portion 49 of the lining assembly 27 and the guide plate 25 absorbs the dimensional tolerance in a thickness direction of the lining assembly 27, it is possible to prevent dispersion in contact properties of each lining assembly 27 with respect to the disc rotor.

Therefore, stable braking characteristics can be maintained without being affected by the dimensional tolerance in the thickness direction of the lining assembly 27.

The back plate portion 33 of each lining assembly 27 is formed with a link abutting portion 59 having a concave curved surface at the center and engagement holes 61 for stopping rotation illustrated in Fig. 5 at a position away from the center.

Correspondingly, the first link plate 21 and the second link plate 23 are provided with rotation restriction portions 63 loosely fitted in the engagement holes 61 to restrict rotating behavior of the respective lining assemblies 27. The rotation restriction portion 63 is formed by bending a projecting piece extending from end portions of the first link plate 21 and the second link plate 23 to the engagement hole side.

The first link plate 21 and the second link plate 23 are formed with a back plate abutting curved surface portion 57 corresponding to the link abutting portion 59 of the back plate portion 33. The back plate abutting curved surface portion 57 is formed on a convex curved surface on which the link abutting portion 59 swingably abuts.

As illustrated in Fig. 3, the spring member 53 clamped between the inner surfaces 17a of the torque receiving plate 17 is provided on the back surfaces 21a, 23a side of the first link plate 21 and the second link plate 23. The spring member 53 is formed in a circular shape with a uniform thickness. The spring member 53 is compressed between the spot facing portion 18 formed on the inner surface 17a of the torque receiving plate 17 and the spot facing portion 24 formed on the back surfaces 21a, 23a of the first link plate 21 and the second link plate 23. The spring member 53 may be attached to the spot facing portion 18 of the torque receiving plate 17 by, for example, an adhesive layer (not illustrated).

In the first arrangement, the spring member 53 is a formed product of a mesh spring processed by knitting a wire rod of a stainless steel wire and weaving in a mesh shape and molding in a circular plate shape with a uniform thickness. The mesh spring is in a state in which countless wire rods are entangled inside, has a proper elastic modulus in directions in a plane and perpendicular to a plane, and has a vibration damping performance with a significantly great friction effect. Certainly, the spring member is not limited to the formed product of the mesh spring formed by weaving the stainless steel wire of this arrangement in a mesh shape, and a formed product of a mesh spring formed by weaving various wire rods such as a galvanized iron wire and a resin fiber having heat resistance in a mesh shape can be used. However, according to the present invention the claimed spring member a formed product of a mesh spring formed by weaving a wire rod in a mesh shape.

Next, an assembly procedure of the first friction pad assembly 13 and the second friction pad assembly 15 is described taking the first friction pad assembly 13 as an example.

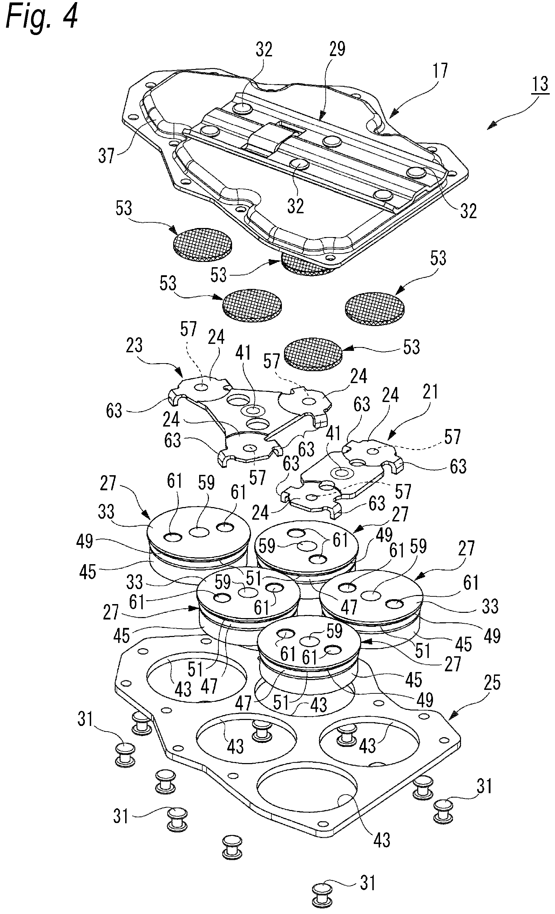

To assemble the first friction pad assembly 13, first, as illustrated in Fig. 4, the lining assembly 27 is inserted and equipped in the guide hole portion 43 of the guide plate 25 with the back set upward such that the friction material 45 projects to a front side (lower side in Fig. 4) of the guide plate 25. At this time, the leaf spring 51 is fitted into the plate fitting portion 47 of each lining assembly 27. The lining assembly 27 is inserted into the guide hole portion 43, so that the leaf spring 51 is sandwiched between the guide plate 25 and the retaining flange portion 49. In the lining assembly 27 inserted and equipped in the guide hole portion 43, the retaining flange portion 49 is brought into a state of abutting on a peripheral portion of the guide hole portion 43 via the leaf spring 51 (see Fig. 3).

Next, as illustrated in Fig. 6, the first link plate 21 and the second link plate 23 are placed on the lining assembly 27 so that the back plate abutting curved surface portion 57 faces the link abutting portion 59 at the back center of the back plate portion 33. At the same time, the rotation restriction portions 63 of the first link plate 21 and the second link plate 23 are engaged with the engagement holes 61 for stopping rotation.

When the first link plate 21 and the second link plate 23 are equipped on the back side of the lining assembly 27, as illustrated in Fig. 7, the spring member 53 is placed at a predetermined position of the spot facing portion 24 of the first link plate 21 and the second link plate 23. When the spring members 53 are placed on the first link plate 21 and the second link plate 23, the torque receiving plate 17 is covered by the guide plate 25. At this time, the anchor plate 29 is fixed to the torque receiving plate 17 by the rivets 32. Finally, the outer peripheral portion of the guide plate 25 and the torque receiving plate 17 are clamped and fixed by the rivets 31 passing through each other, and assembling of the friction pad assembly 11 for a disc brake is completed.

Next, functions of the above configuration will be described.

In the first friction pad assembly 13 of the friction pad assembly for a disc brake 11 according to the first arrangement, the first link plate 21 and the second link plate 23 act a pressing force from the torque receiving plate 17 on the lining assemblies 27. The spring member 53 is provided between the spot facing portion 24 of the first link plate 21 and the second link plate 23 and the spot facing portion 18 of the torque receiving plate 17. That is, the pressing force from the torque receiving plate 17 is transmitted directly from the plate abutting curved surface portion 41 to the first link plate 21 and the second link plate 23, and is also transmitted to the first link plate 21 and the second link plate 23 via the spring member 53.

Therefore, slight swinging of the first link plate 21 and the second link plate 23 is allowed by displacement in a thickness direction of the spring member 53. In the friction pad assembly 11 for a disc brake, the small divided lining assemblies 27 are swingably supported by the first link plate 21 and the second link plate 23. Therefore, the lining assemblies 27 follow undulation of the disc rotor surface by individual swinging respectively to contact with a surface of the disc rotor. Therefore, the friction pad assembly 11 for a disc brake can maintain a stable friction area and stable braking characteristics.

In the friction pad assembly 11 for a disc brake, the guide plate 25 and the torque receiving plate 17 form an integral case structure by fastening by the rivets 31. The outer diameter of the retaining flange portion 49 formed at the back plate portion 33 of the lining assembly 27 is set larger than that of the guide hole portion 43 of the guide plate 25, and the lining assembly 27 does not fall off the guide plate 25 due to catch of the retaining flange portion 49. For this reason, it is possible to obtain a solid case structure without loosening due to vibration or the like, and to obtain a highly safe and inexpensive structure without falling off the guide plate 25 by the lining assembly 27.

Further, the spring member 53 provided between the inner surface 17a of the torque receiving plate 17 and the back surfaces 21a, 23a of the first link plate 21 and the second link plate 23 contributes to noise reduction due to contact between the first link plate 21 and the second link plate 23 and the torque receiving plate 17. That is, the pressing force from the torque receiving plate 17 is transmitted to the lining assembly 27 via the spring member 53 having both an elastic function and a vibration suppressing function. Therefore, the spring member 53 provided between the torque receiving plate 17 and the first link plate 21 and the second link plate 23 blocks or reduces vibration propagating between the lining assembly 27 and the torque receiving plate 17 via the first link plate 21 and the second link plate 23, so that noise can be reduced. Further, the spring member 53 biases the lining assembly 27 to the guide plate 25 side, so that a load difference acting on the respective lining assemblies 27 due to difference of the rotor surface due to thermal deformation and difference in the friction material thickness is alleviated from becoming an overload phenomenon of the friction material 45.

Further, in the friction pad assembly 11 for a disc brake of the first arrangement, the spring member 53 is a formed product of a mesh spring processed by knitting a stainless steel wire and weaving in a mesh shape and molding in a circular shape. The mesh spring is in a state in which countless wire rods are entangled at details, has a proper elastic modulus in directions in a plane and perpendicular to a plane, and has a vibration damping performance with a significantly great friction effect. Therefore, the spring member 53 made of the formed product of the mesh spring can appropriately control displacement (spring constant) in directions in a plane and perpendicular to a plane and can appropriately attenuate vibration in directions in a plane and perpendicular to a plane, and a large effect can be exerted with respect to in-plane ringing.

Further, in the friction pad assembly 11 for a disc brake of the first arrangement, the spring member 53 can be positioned with respect to the first link plate 21 and the second link plate 23 by the spot facing portion 24, and the spring member 53 can be positioned with respect to the torque receiving plate 17 by the spot facing portion 18.

Therefore, the spring member 53 does not deviate from a back surface of the back plate portion 33 and prevents movement of the lining assembly 27. Further, an increase in a disposition interval between the torque receiving plate 17 and the back plate portion 33 can be suppressed. Therefore, in the friction pad assembly 11 for a disc brake, it is possible to reduce thickness by suppressing dimensions in a direction orthogonal to a sliding surface of the disc rotor.

In the assembly procedure in which the guide plate 25, the lining assembly 27, the spring member 53, the first link plate 21 and the second link plate 23, and the torque receiving plate 17 are laminated in order and assembled, since the spring member 53 is temporarily held on the first link plate 21 and the second link plate 23 in a positioned state, an assemblability of the friction pad assembly 11 for a disc brake is improved.

Further, the spring member 53 is compressed between the spot facing portion 18 of the torque receiving plate 17 and the spot facing portion 24 of the first link plate 21 and the second link plate 23. Therefore, if a pressing load acting on the friction material 45 exceeds a set load when the anchor plate 29 moves to the disc rotor side by the actuator built in the caliper and the friction material 45 is pressed against the disc rotor, the spring member 53 is compressed and the inner surface 17a of the torque receiving plate 17 abuts on the back surface of the first link plate 21 and the second link plate 23. Therefore, the spring member 53 does not generate permanent deformation by acting a predetermined or more pressing force during braking.

Therefore, the friction pad assembly 11 for a disc brake according to the first arrangement can reduce noise during braking caused by contact between the first link plate 21 and the second link plate 23 and the torque receiving plate 17.

Next, a second arrangement of the friction pad assembly for a disc brake according to the present invention will be described.

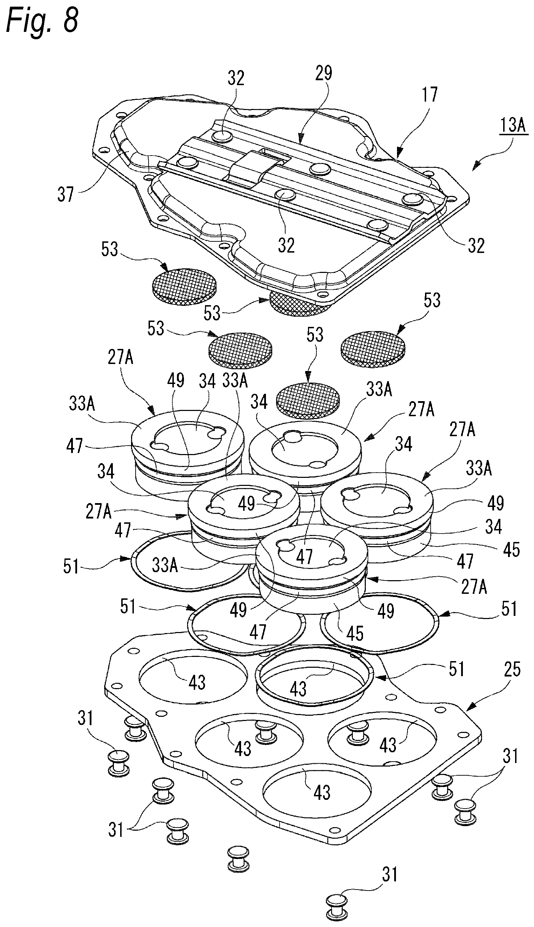

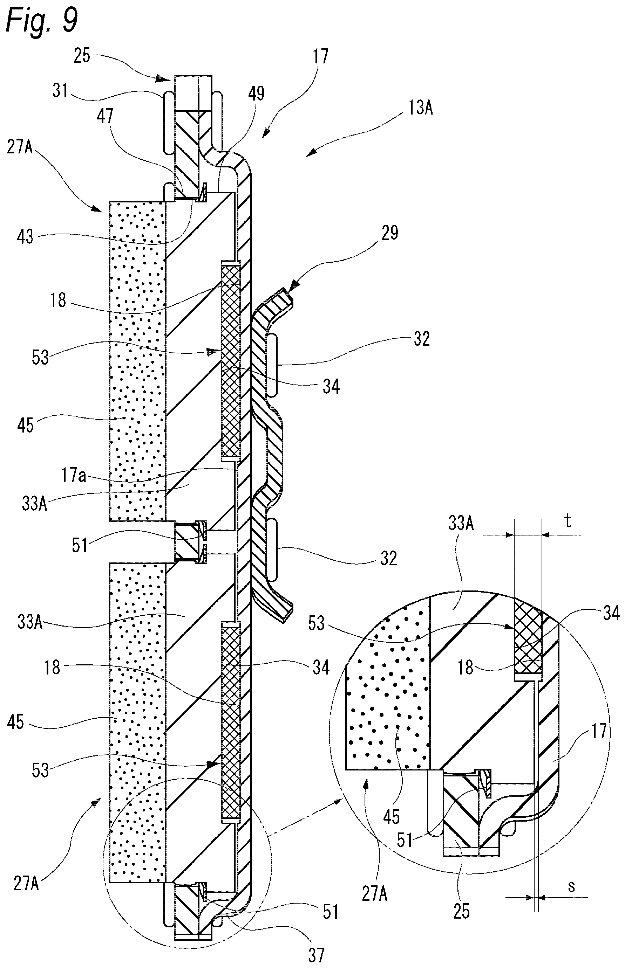

Fig. 8 is an exploded perspective view of a friction pad assembly for a disc brake according to a second unclaimed arrangement, and Fig. 9 is a sectional view and a main part enlarged view of the friction pad assembly for a disc brake illustrated in Fig. 8. In the following arrangements, the same reference numerals are attached to the same members/regions as members/regions of the friction pad assembly 11 for a disc brake illustrated in Fig. 1 to Fig. 7, and repeated description is omitted.

As illustrated in Fig. 8, in a first friction pad assembly 13A of the friction pad assembly for a disc brake according to the second arrangement, a lining assembly 27A is used instead of the lining assembly 27 in the first friction pad assembly 13 according to the first arrangement, and the spring member 53 is directly clamped between a back plate portion 33A and the inner surface 17a of the torque receiving plate 17. A spot facing portion 34 for positioning the spring member 53 is formed on a back surface of the back plate portion 33A of each lining assembly 27A. The spot facing portion 34 is a circular recess having an inner diameter slightly larger than an outer diameter of the spring member 53.

As illustrated in Fig. 9, the spring member 53 is compressed between the spot facing portion 18 formed on the inner surface 17a of the torque receiving plate 17 and the spot facing portion 34 formed on the back surface of the back plate portion 33A. That is, the spring member 53 directly clamped between the torque receiving plate 17 and the lining assembly 27A is elastically compressed to a thickness t, and a gap s is formed between the inner surface 17a of the torque receiving plate 17 and the back surface of the back plate portion 33A.

According to the first friction pad assembly 13A, the pressing force from the torque receiving plate 17 is transmitted to the lining assembly 27A via the spring member 53 having both an elastic function and a vibration suppressing function. Therefore, the spring member 53 provided between the torque receiving plate 17 and the back plate portion 33A contributes to reduction of noise due to contact between the torque receiving plate 17 and the back plate portion 33A. That is, the spring member 53 biases the lining assembly 27A to the guide plate 25 side, so that a load difference acting on the respective lining assemblies 27A due to difference of the rotor surface due to thermal deformation and difference in the friction material thickness is alleviated from becoming an overload phenomenon of the friction material 45, and vibration propagating between the lining assembly 27 and the torque receiving plate 17 is blocked or reduced, and thus noise can be reduced.

Further, in the first friction pad assembly 13A, the spring member 53 can be positioned with respect to the back plate portion 33A by the spot facing portion 34, and the spring member 53 can be positioned with respect to the torque receiving plate 17 by the spot facing portion 18.

Therefore, the spring member 53 does not deviate from a back surface of the back plate portion 33A and prevents movement of the lining assembly 27A. Further, an increase in a disposition interval between the torque receiving plate 17 and the back plate portion 33A can be suppressed. Therefore, in the first friction pad assembly 13A, it is possible to reduce thickness by suppressing dimensions in a direction orthogonal to a sliding surface of the disc rotor.

In the assembly procedure in which the guide plate 25, the lining assembly 27A, the spring member 53, and the torque receiving plate 17 are laminated in order and assembled, since the spring member 53 is temporarily held on the back plate portion 33A of the lining assembly 27A in a positioned state, an assemblability of the first friction pad assembly 13A is improved.

Further, the spring member 53 is compressed between the spot facing portion 18 of the torque receiving plate 17 and the spot facing portion 34 of the back plate portion 33A. Therefore, if a pressing load acting on the friction material 45 exceeds a set load when the anchor plate 29 moves to the disc rotor side by the actuator built in the caliper and the friction material 45 is pressed against the disc rotor, the spring member 53 is compressed and there is no gap s, and the inner surface 17a of the torque receiving plate 17 abuts on the back surface of the back plate portion 33A. Therefore, the spring member 53 does not generate permanent deformation by acting a predetermined or more pressing force during braking.

Therefore, same as the first friction pad assembly 13 in the friction pad assembly 11 for a disc brake according to the first arrangement, the first friction pad assembly 13A according to the second arrangement can reduce noise during braking caused by contact between the back plate portion 33A and the torque receiving plate 17.

Next, a third arrangement of the friction pad assembly for a disc brake according to the present invention will be described.

Fig. 10 is an exploded perspective view of a friction pad assembly for a disc brake according to the invention, and Fig. 11 is a sectional view of the friction pad assembly for a disc brake illustrated in Fig. 10.

As illustrated in Fig. 10, in a first friction pad assembly 13B of the friction pad assembly for a disc brake according to the third arrangement, a lining assembly 27B is used instead of the lining assembly 27A in the first friction pad assembly 13A according to the second arrangement, and a torque receiving plate 17B is used instead of the torque receiving plate 17, and a spring member 62 is directly clamped between lining assembly 27B and the inner surface 17a of the torque receiving plate 17B. The third arrangement is an embodiment of the present invention.

The lining assembly 27B includes a friction material 45 formed in an approximate disc shape, a back plate portion 33B fixed to a back surface of the friction material 45, and a fitting plate (joint) 82 disposed on a back surface of the back plate portion (surface opposite to the friction material 45).

A circular recessed accommodation recess 36 is formed on the back of the back plate portion 33B. The accommodation recess 36 accommodates the fitting plate 82 and the spring member 62. The fitting plate 82 is made of metal and is formed in a circular plate shape. A metal having a low thermal conductivity is used for the fitting plate 82 as compared with the back plate portion 33B. At a center of the fitting plate 82, an abutting curved surface portion 84 which abuts on the torque receiving plate 17B is formed to project to be a circular convex curved surface, and an annular spring bearing surface on which the spring member 62 abuts is formed around the abutting curved surface portion 84.

Therefore, the spring member 62 is set on the spring bearing surface of the fitting plate 82 accommodated in the accommodating recess 36. The spring member 62 of this arrangement is a formed product of a mesh spring formed in an annular shape whose outer diameter is set smaller than an outer diameter of the spring bearing surface of the fitting plate 82, and whose inner diameter of the inner hole 62a is set larger than an outer diameter of the abutting curved surface portion 84. Therefore, the spring member 62 is compressed between the spring bearing surface of the fitting plate 82 and the inner surface 17a of the torque receiving plate 17B. The abutting curved surface portion 84 abuts on the torque receiving plate 17B by compressing the spring member 62 during braking.

According to the first friction pad assembly 13B, the pressing force from the torque receiving plate 17B is transmitted to the lining assembly 27B via the spring member 62 having both an elastic function and a vibration suppressing function. Therefore, the spring member 62 provided between the torque receiving plate 17B and the back plate portion 33B by the fitting plate 82 contributes to reduction of noise due to contact between the torque receiving plate 17B and the back plate portion 33B. That is, the spring member 62 biases the lining assembly 27B to the guide plate 25 side, so that a load difference acting on the respective lining assemblies 27B due to difference of the rotor surface due to thermal deformation and difference in the friction material thickness is alleviated from becoming an overload phenomenon of the friction material 45, and vibration propagating between the lining assembly 27B and the torque receiving plate 17B is blocked or reduced, and thus noise can be reduced.

In the assembly procedure in which the guide plate 25, the lining assembly 27B, the fitting plate 82, the spring member 62, and the torque receiving plate 17B are laminated in order and assembled, since the spring member 62 is temporarily held on the fitting plate 82 in a positioned state, an assemblability of the first friction pad assembly 13B is improved.

Further, the spring member 62 is compressed between the inner surface 17a of the torque receiving portion 17 and the fitting plate 82 accommodated in the accommodation recess 36 of the back plate portion 33B. Therefore, if a pressing load acting on the friction material 45 exceeds a set load when the anchor plate 29 moves to the disc rotor side by the actuator built in the caliper and the friction material 45 is pressed against the disc rotor, the abutting curved surface portion 84 of the fitting plate 82 where the spring member 62 is compressed and fixed to the back plate portion 33B projects from the inner hole 62a of the spring member 62 and abuts on the torque receiving plate 17, and the abutting curved surface portion 84 allows inclination of the lining assembly 27B.

The inner surface 17a of the torque receiving plate 17 on which the abutting curved surface portion 84 abuts is finished on a smooth surface such that a contact point can freely move along with swinging motion during the swinging motion of the lining assembly 27B.

Therefore, same as the friction pad assembly 13B for a disc brake according to the first arrangement, the first friction pad assembly 13B according to the third arrangement can reduce noise during braking caused by contact between the back plate portion 33B and the torque receiving plate 17.

Next, a fourth arrangement of the friction pad assembly for a disc brake according to the present invention will be described.

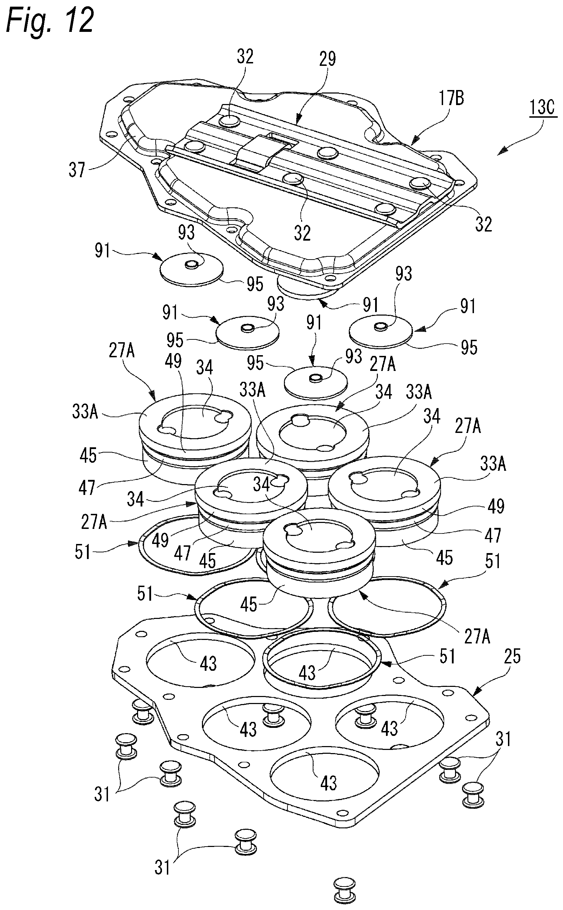

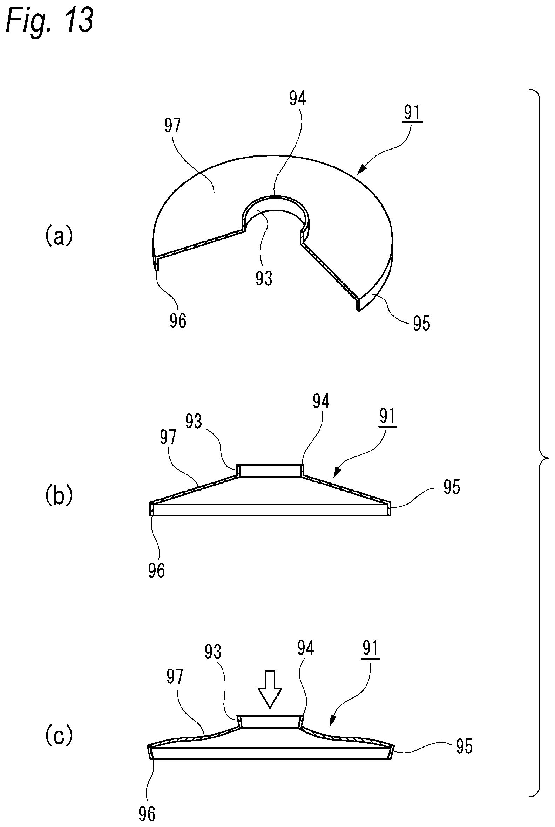

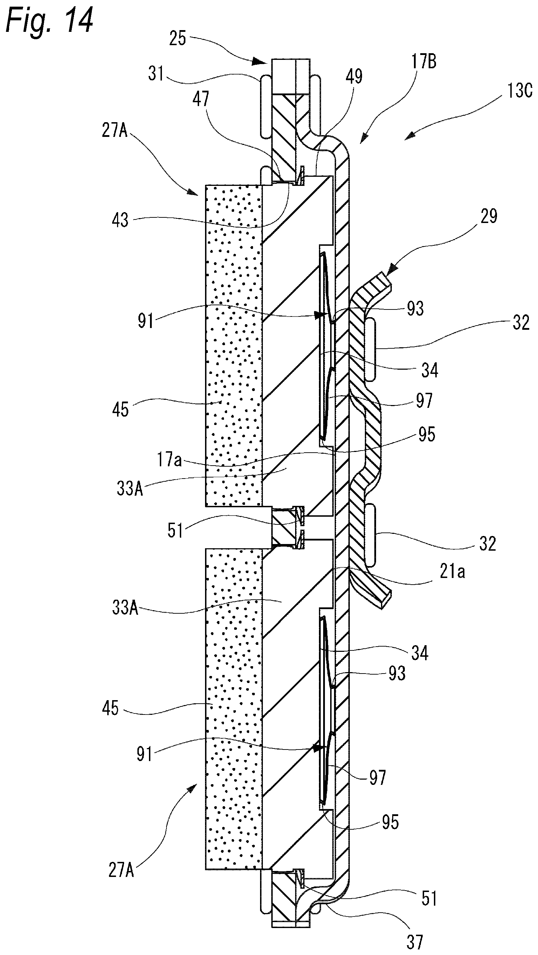

Fig. 12 is an exploded perspective view of a friction pad assembly for a disc brake according to a fourth unclaimed arrangement. Fig. 13 is an explanatory view which explains a spring member illustrated in Fig. 12. Fig. 13(a) is a partially broken perspective view, Fig. 13(b) is a longitudinal sectional view, and Fig. 13(c) is a longitudinal sectional view of an attached state. Fig. 14 is a sectional view of the friction pad assembly for a disc brake illustrated in Fig. 12.

As illustrated in Fig. 12, in a first friction pad assembly 13C of the friction pad assembly for a disc brake according to the fourth arrangement, the torque receiving plate 17B is used instead of the torque receiving plate 17 in the first friction pad assembly 13A according to the second arrangement, and a spring member 91 is used instead of the spring member 53.

A spot facing portion 34 for positioning the spring member 91 is formed on a back surface of the back plate portion 33A of each lining assembly 27A. The spot facing portion 34 is a circular recess having an inner diameter slightly larger than the outer diameter of the spring member 91.

As illustrated in Fig. 13(a) and Fig. 13(b), the spring member 91 according to the fourth arrangement is a metal convex spring including a flat conical disc spring portion 97 and a small-diameter cylindrical portion 93 and a large-diameter cylindrical portion 95 provided at upper and lower ends of the disc spring portion 97.

In the convex spring, as illustrated in Fig. 13(c), the small-diameter cylindrical portion 93 and the large-diameter cylindrical portion 95 provided at the upper and lower ends of the disc spring portion 97 absorb deformation of the disc spring portion 97. Therefore, the convex spring is not affected by friction since an upper end 94 and a lower end 96 do not move with respect to an attachment surface while ensuring non-linear load/deflection characteristics peculiar to the disc spring. As a result, the convex spring can set a dynamic spring constant small, has an appropriate elastic modulus in directions a plane and perpendicular to a plane, and has excellent vibration damping performance capable of reducing vibration transmission in a high-frequency band.

As illustrated in Fig. 14, the spring member 91 is compressed between the inner surface 17a of the torque receiving plate 17 and the spot facing portion 34 formed on the back surface of the back plate portion 33A.

According to a fourth friction pad assembly 13C, the pressing force from the torque receiving plate 17 is transmitted to the lining assembly 27A via the spring member 91 having both an elastic function and a vibration suppressing function. Therefore, the spring member 91 provided between the torque receiving plate 17B and the back plate portion 33A contributes to reduction of noise due to contact between the torque receiving plate 17B and the back plate portion 33A. That is, the spring member 91 biases the lining assembly 27A to the guide plate 25 side, so that a load difference acting on the respective lining assemblies 27A due to difference of the rotor surface due to thermal deformation and difference in the friction material thickness is alleviated from becoming an overload phenomenon of the friction material 45, and vibration propagating between the lining assembly 27A and the torque receiving plate 17B is blocked or reduced, and thus noise can be reduced.

Further, in the first friction pad assembly 13C, the spring member 91 can be positioned with respect to the back plate portion 33A by the spot facing portion 34.

Therefore, the spring member 91 does not deviate from a back surface of the back plate portion 33A and prevents movement of the lining assembly 27A. In the assembly procedure in which the guide plate 25, the lining assembly 27A, the spring member 91, and the torque receiving plate 17B are laminated in order and assembled, since the spring member 91 is temporarily held on the back plate portion 33A of the lining assembly 27A in a positioned state, an assemblability of the first friction pad assembly 13C is improved.

Further, the spring member 91 is compressed between the inner surface 17a of the torque receiving plate 17 and the spot facing portion 34 of the back plate portion 33A. Therefore, if a pressing load acting on the friction material 45 exceeds a set load when the anchor plate 29 moves to the disc rotor side by the actuator built in the caliper and the friction material 45 is pressed against the disc rotor, the spring member 91 is compressed, and the inner surface 17a of the torque receiving plate 17B abuts on the back surface of the back plate portion 33A. Therefore, the spring member 91 does not generate permanent deformation by acting a predetermined or more pressing force during braking.

Therefore, same as the friction pad assembly 13C for a disc brake according to the fourth arrangement, the first friction pad assembly 13B according to the second arrangement can reduce noise during braking caused by contact between the back plate portion 33A and the torque receiving plate 17B.

For example, when one friction pad assembly for a disc brake is composed of a plurality of unit friction pad assemblies, the number of the unit friction pad assemblies to be composed may be one or three or more.

It is needless to say that the spring member is not limited to the mesh spring or the convex spring of the above arrangements, and various forms can be adopted as long as the spring member has an elastic function of biasing the lining assembly to the guide plate side and a vibration suppressing function of suppressing vibration generated when the disc rotor contacts with the friction material. However, according to the present invention the spring member is a formed product of a mesh spring formed by weaving a wire rod in a mesh shape and the aforementioned variants of the spring member are helpful for understanding the present invention.

The present application is based on Japanese Patent Application No. 2016-119011 filed on June 15, 2016, contents of which are incorporated herein as reference.

### Industrial Applicability

According to the friction pad assembly for a disc brake, the load difference acting on the respective lining assemblies is alleviated from becoming an overload phenomenon of the friction material, and vibration propagating between the lining assembly and the torque receiving plate is blocked or reduced, so that noise can be reduced.

### Description of Reference Numerals

- 11: friction pad assembly for disc brake
- 17: torque receiving plate
- 17A: inner surface
- 21: first link plate (link plate)
- 21a: back surface
- 23: second link plate (link plate)
- 23a: back surface
- 25: guide plate
- 27: lining assembly
- 33: back plate portion
- 43: guide hole portion
- 45: friction material
- 47: plate fitting portion
- 53: spring member

## Claims

1. A friction pad assembly (11) for a disc brake in which at least one lining assembly (27) is swingably supported by a guide plate (25) receiving braking torque and the lining assembly (27) is pressed against a disc rotor, wherein
the lining assembly (27) includes a friction material (45) that comes in contact with the disc rotor during braking and a back plate portion (33) fixed to a back surface of the friction material (45),
the back plate portion (33) includes a plate fitting portion (47) swingably fitted to a guide hole (43) portion provided in the guide plate (25),
the plate fitting portion (47) is inserted and equipped in the guide hole portion (43), and transmits the braking torque acting when the disc rotor contacts with the friction material (45) from the plate fitting portion (47) to the guide plate (25), and
a spring member (62) having an annular shape and having an elastic function of biasing the lining assembly (27) to the guide plate side and a vibration suppressing function of suppressing vibration generated when the disc rotor contacts with the friction material (45) is provided between an inner surface of a torque receiving plate (17) fixed to the guide plate (25) and the back of the back plate portion (33),
**characterised by** a fitting plate (82) accommodated in an accommodation recess (36) formed on a back of the back plate portion (33) and
wherein the spring member (62) comes in contact with the inner surface of the torque receiving plate (17), and is disposed so as to come in contact with an annular spring bearing surface formed around an abutting curved surface portion (84) which is formed to project on a center of the fitting plate (82), wherein the spring member (62) is a formed product of a mesh spring formed by weaving a wire rod in a mesh shape.

## Patentansprüche

1. Reibbelagbaugruppe (11) für eine Scheibenbremse, bei der mindestens eine Belagbaugruppe (27) schwenkbar von einer Führungsplatte (25) getragen wird, die das Bremsmoment aufnimmt, und die Belagbaugruppe (27) gegen einen Scheibenrotor gedrückt wird, wobei
die Belagbaugruppe (27) ein Reibmaterial (45), das während des Bremsens mit dem Scheibenrotor in Kontakt kommt, und einen an einer Rückseite des Reibmaterials (45) befestigten hinteren Plattenabschnitt (33) aufweist,
der hintere Plattenabschnitt (33) einen Plattenpassabschnitt (47), der schwenkbar in einen in der Führungsplatte (25) vorgesehenen Führungslochabschnitt (43) eingepasst ist, aufweist,
der Plattenpassabschnitt (47) in den Führungslochabschnitt (43) eingesetzt und ausgestattet ist und das Bremsmoment, das wirkt, wenn der Scheibenrotor mit dem Reibmaterial (45) in Kontakt kommt, von dem Plattenpassabschnitt (47) auf die Führungsplatte (25) überträgt, und
ein Federelement (62), das eine ringförmige Gestalt hat und eine elastische Funktion des Vorspannens der Belagbaugruppe (27) zur Führungsplattenseite und eine Vibrationsunterdrückungsfunktion des Unterdrückens von Vibrationen hat, die erzeugt werden, wenn der Scheibenrotor mit dem Reibmaterial (45) in Kontakt kommt, zwischen einer Innenfläche einer Drehmomentaufnahmeplatte (17), die an der Führungsplatte (25) befestigt ist, und der Rückseite des hinteren Plattenabschnitts (33) vorgesehen ist,
**gekennzeichnet durch** eine Passsplatte (82), die in einer auf einer Rückseite des hinteren Plattenabschnitts (33) ausgebildeten Aufnahmeaussparung (36) untergebracht ist, und
wobei das Federelement (62) mit der Innenfläche der Drehmomentaufnahmeplatte (17) in Berührung kommt und so angeordnet ist, dass es mit einer ringförmigen Federlagerfläche in Berührung kommt, die um einen anstoßenden gekrümmten Flächenabschnitt (84) herum ausgebildet ist, der so ausgebildet ist, dass er auf einen Zentrum der Passplatte (82) vorsteht, wobei das Federelement (62) ein geformtes Produkt einer Maschenfeder ist, die durch Weben eines Drahtes in einer Maschenform gebildet wird.

## Revendications

1. Ensemble de plaquette de friction (11) pour un frein à disque dans lequel au moins un ensemble de revêtement (27) est supporté de manière pivotante par une plaque de guidage (25) recevant un couple de freinage et l'ensemble de revêtement (27) est pressé contre un rotor de disque, dans lequel
l'ensemble de revêtement (27) comprend un matériau de friction (45) qui vient en contact avec le rotor de disque pendant un freinage et une partie de plaque arrière (33) fixée à une surface arrière du matériau de friction (45),
la partie de plaque arrière (33) comprend une partie de montage de plaque (47) montée de manière pivotante sur une partie de trou de guidage (43) agencée dans la plaque de guidage (25),
la partie de montage de plaque (47) est insérée et équipée dans la partie de trou de guidage (43), et transmet le couple de freinage agissant lorsque le rotor de disque entre en contact avec le matériau de friction (45) depuis la partie de montage de plaque (47) à la plaque de guidage (25), et
un élément de ressort (62) ayant une forme annulaire et ayant une fonction élastique de sollicitation de l'ensemble de revêtement (27) vers le côté plaque de guidage et une fonction de suppression de vibration consistant à supprimer une vibration générée lorsque le rotor de disque entre en contact avec le matériau de friction (45) est agencé entre une surface intérieure d'une plaque de réception de couple (17) fixée à la plaque de guidage (25) et l'arrière de la partie de plaque arrière (33),
**caractérisé par** une plaque de montage (82) logée dans un évidement de logement (36) formé sur un arrière de la partie de plaque arrière (33) et
dans lequel l'élément de ressort (62) vient en contact avec la surface intérieure de la plaque de réception de couple (17) et est disposé de manière à venir en contact avec une surface de support de ressort annulaire formée autour d'une partie de surface incurvée contiguë (84) qui est formée pour faire saillie sur un centre de la plaque de montage (82), dans lequel l'élément de ressort (62) est un produit formé d'un ressort à mailles formé en tissant un fil machine en forme de mailles.
